# EUROPÄISCHE PATENTANMELDUNG

(11) **EP 1 273 955 A1**
(43) Veröffentlichungstag der Anmeldung: **08.01.2003**
(21) Anmeldenummer: 01116225.2
(22) Anmeldetag: 04.07.2001
(51) Int. Cl.: G02B 26/02

(54) **Optische Verschlussvorrichtung**

(71) Anmelder: MUETEC Automatisierte Mikroskopie und Messtechnik GmbH, 80993 München (DE)
(72) Erfinder: Ammerl, Josef, 94130 Obernzell (DE); Helbing, Jürgen, 80995 München (DE); Brück, Hans-Jürgen, 81247 München (DE)
(74) Vertreter: Grünecker, Kinkeldey, Stockmair & Schwanhäusser Anwaltssozietät

(57) **Zusammenfassung**

Die Erfindung betrifft eine optische Verschlussvorrichtung für eine wahlweise Unterbrechung eines Strahlengangs, insbesondere für Licht in einem Wellenlängenbereich unter 300 nm, mit einer Sperreinrichtung, die in wenigstens eine Stellung zur Unterbrechung des Strahlengangs und in wenigstens eine Stellung zur Öffnung des Strahlengangs bringbar ist.

## Beschreibung

### Gebiet der Erfindung

Die Erfindung betrifft ein Verfahren, um empfindliche Bauteile optischer Vorrichtungen vor permanenter Bestrahlung, insbesondere mit aggressivem Licht mit einer Wellenlänge unterhalb von 300 nm, zu schützen.

Weiterhin betrifft die Erfindung eine optische Verschlussvorrichtung (Shutter), die dazu verwendbar ist, um empfindliche optische Bauteile vor permanenter Bestrahlung zu schützen.

Ferner betrifft die Erfindung optische Vorrichtungen, die so eingerichtet sind, dass empfindliche Bauteile der optischen Vorrichtungen vor permanenter Bestrahlung mit aggressivem Licht, insbesondere UV Strahlung, geschützt werden können.

### Stand der Technik

Aggressive Strahlung wie UV Strahlung kann bei Absorption eine starke materialzerstörende Wirkung entfalten, u.a. aufgrund der durch die Absorption bedingten Wärmeentwicklung. Bei Dauerbelastung führt dies sehr schnell zur Beschädigung und Zerstörung von Bauteilen optischer Vorrichtungen, z.B. Vorrichtungen zur Materialbearbeitung oder Messvorrichtungen, insbesondere Mikroskopen, die solche Strahlung verwenden. Ebenso kann eine zu lange Strahlungsbelastung zu einer Beschädigung und Zerstörung der zu bearbeitenden oder zu untersuchenden Substanzen führen.

Deswegen empfiehlt es sich, die optischen Einrichtungen und insbesondere deren empfindlicheren optischen Elemente der Strahlung nicht länger als notwendig auszusetzen, bei Messvorrichtungen also z.B. nur während der reinen Messzeit. Dies kann dadurch erreicht werden, dass die Strahlungsquellen während der Totzeit ausgeschaltet werden.

Andererseits ist es bei vielen Strahlungsquellen, insbesondere bei solchen im UV Bereich und noch spezieller in einem Wellenlängenbereich unterhalb von 300 nm, unpraktisch bis unmöglich, diese bei Bedarf aus dem ausgeschalteten Zustand innerhalb kurzer Zeit einzuschalten. So ist z.B. in vielen Fällen die Zeit, die eine derartige Strahlungsquelle nach dem Einschalten bis zum Erreichen einer für die Messung erforderlichen stabilen Strahlungsintensität benötigt, um ein Vielfaches länger als die eigentliche Messzeit.

### Beschreibung der Erfindung

Angesichts dieser Nachteile liegt der vorliegenden Erfindung die Aufgabe zugrunde, eine Vorrichtung und ein Verfahren bereitzustellen, welche die oben genannten Probleme vermeiden.

Diese Aufgabe wird durch die optische Verschlussvorrichtung mit den Merkmalen von Anspruch 1 und das Verfahren gemäß Anspruch 13 gelöst.

Die erfindungsgemäße optische Verschlussvorrichtung für eine wahlweise Unterbrechung eines Strahlengangs, insbesondere für Licht in einem Wellenlängenbereich unter 300 nm, umfasst eine drehbare Sperreinrichtung, die in wenigstens eine Stellung zur Unterbrechung des Strahlengangs und in wenigstens eine Stellung zur Öffnung des Strahlengangs drehbar ist, so dass mit der Verschlussvorrichtung eine wahlweise Unterbrechung des Strahlengangs durch einfaches Drehen der Sperreinrichtung ermöglicht wird.

In einer besonders vorteilhaften Weiterbildung umfasst die erfindungsgemäße optische Verschlussvorrichtung eine drehbare Sperreinrichtung, die in wenigstens eine Stellung zur Unterbrechung des Strahlengangs und in wenigstens eine Stellung zur Öffnung des Strahlengangs drehbar ist, so dass mit der Verschlussvorrichtung eine wahlweise Unterbrechung des Strahlengangs durch einfaches Drehen der Sperreinrichtung ermöglicht wird.

Für das Drehen der Sperreinrichtung muss im Wesentlichen nur Rollreibung überwunden werden, so dass die Betätigung der Verschlussvorrichtung eine vergleichsweise geringe Kraft erfordert. Die mechanische Abnutzung ist dabei gegenüber einer Schlitzblende mit Gleitreibung deutlich reduziert, was eine lange Lebensdauer der mechanischen Komponenten gewährleistet.

In einer besonders bevorzugten Weiterbildung der erfindungsgemäßen optischen Verschlussvorrichtung umfasst die Sperreinrichtung einen gekrümmten lichtundurchlässigen Oberflächenbereich.

Wird der lichtundurchlässige Oberflächenbereich in den Strahlengang gebracht, um diesen zu unterbrechen, so bewirkt die Krümmung, dass die Intensität des unterbrochenen Lichtstrahls ein größeres Flächenelement beleuchtet, als es dem Strahlquerschnitt entspricht. Dadurch verringert sich für das den Lichtstrahl unterbrechende Material die Strahlungsbelastung pro Flächeneinheit. Dies kann vor allem bei hochenergetischer Strahlung, z.B. Ultraviolettstrahlung, zu einer Verlängerung der Lebensdauer der Verschlussvorrichtung beitragen.

Bei einer substantiellen Reflexion des unterbrochenen Lichtstrahls durch den lichtundurchlässigen Oberflächenbereich bewirkt die Krümmung im Unterschied zu einer ebenen spiegelnden Fläche zudem eine Strahlaufweitung, wodurch die Energie des reflektierten Lichtstrahl über einen großen Raumwinkel verteilt wird. Dadurch wird die Gefahr reduziert, dass nachfolgende Reflexion und/oder Absorption Schäden anrichten.

In einer vorteilhaften Weiterbildung der erfindungsgemäßen optischen Verschlussvorrichtung umfasst die Sperreinrichtung einen zylindrischen oder sphärischen Oberflächenbereich.

Abgesehen davon, dass der zylindrische oder sphärische Oberflächenbereich alle oben genannten Vorteile einer beliebig gekrümmten Oberfläche aufweist, ist eine Zylinderoder Kugelform besonders für eine drehbare Sperreinrichtung geeignet.

Zur sprachlichen Vereinfachung werden die Begriffe "zylinderförmig" bzw. "kugelförmig" verwendet, um die grobe äußere Erscheinungsform von Elementen zu charakterisieren, selbst wenn die idealisierte Zylindersymmetrie bzw. Kugelsymmetrie verletzt ist. Ein typisches Beispiel dafür ist ein Zylinder mit einer Querbohrung, die die Zylindersymmetrie zerstört.

Bei den letztgenannten Weiterbildungen ist es zweckmäßig, als Drehachse die Zylinderachse bzw. eine Achse durch den Kugelmittelpunkt zu wählen. Dadurch ist eine besonders vorteilhafte und raumsparende Ausgestaltung der beweglichen Teile der Verschlussvorrichtung möglich. Ferner sind Drehmomente, die zum Betätigen, d.h. Schließen oder Öffnen, der Verschlussvorrichtung aufgebracht werden müssen, im Wesentlichen unabhängig von der jeweiligen Stellung der Sperreinrichtung.

Während beispielsweise eine einfache Ausführung der Erfindung eine Platte umfasst, die durch Verschieben in den Strahlengang gebracht werden kann, so weist eine besonders bevorzugte Weiterbildung der erfindungsgemäßen optischen Verschlussvorrichtung eine Sperreinrichtung, z.B. eine Platte, mit wenigstens einer durchgehenden Bohrung auf, die mit dem Strahlengang ausrichtbar ist, um den Durchgang eines Lichtstrahls zu ermöglichen.

Ebenso sind Weiterbildungen bevorzugt, in der die Sperreinrichtung genau eine durchgehende Bohrung aufweist. Dies erlaubt eine einfachere Steuerung der gesamten Vorrichtung, insbesondere einen einfachen mechanischen Aufbau. Die Bohrungen können im einfachsten Fall einen kreisförmigen Querschnitt aufweisen. Es können aber auch elliptische, rechteckige und andere Querschnittsformen von Vorteil sein, insbesondere dann, wenn der Strahlquerschnitt von der Kreisform abweicht.

Solche Weiterbildungen erlauben eine einfache geometrische Anordnung der unterschiedlichen Elemente, sowie bei einem vorgegebenen Strahlquerschnitt eine möglichst raumsparende Sperreinrichtung.

In einer Weiterbildung umfasst die erfindungsgemäße optische Verschlussvorrichtung ferner eine Halterungseinrichtung, in der die Sperreinrichtung drehbar gelagert ist.

Dadurch kann die Verschlussvorrichtung in kompakter modularer Bauweise bereitgestellt werden, was einen einfachen Einbau der Verschlussvorrichtung in eine gegebene optische Messvorrichtung sowie eine unkomplizierte Justierung ermöglicht.

Vorzugsweise umfasst die erfindungsgemäße optische Verschlussvorrichtung Einrichtungen wie Blenden und optische Dichtungen, um den Durchgang von Streulicht durch die optische Verschlussvorrichtung zu verhindern. Z.B. kann dadurch der unerwünschte Durchgang von mehrfach reflektiertem Licht verhindert werden. Seitlich können zu diesem Zweck beispielsweise Labyrinthdichtungen eingesetzt werden.

In einer weiteren vorteilhaften Weiterbildung umfasst die optische Verschlussvorrichtung eine Betätigungseinrichtung, um die Sperreinrichtung in die wenigstens eine Stellung zur Unterbrechung des Strahlengangs und in die wenigstens eine Stellung zur Öffnung des Strahlengangs zu bringen, - im Speziellen - zu drehen.

Hierzu eignen sich nahezu alle Arten von Elektromotoren, z.B. auch Schrittmotoren. Zweckmäßigerweise wird die Wellenlagerung des Motors gleichzeitig zur Lagerung der Sperreinrichtung verwendet.

In einer einfachen Ausbildung kann die Betätigungseinrichtung manuell durch eine Bedienperson betätigt werden. Vorzugsweise ist aber eine Steuereinrichtung zur Steuerung der Betätigungseinrichtung vorgesehen, die die wenigstens eine Sperrstellung bzw. Durchlassstellung automatisch anfährt. Durch Vorgabe einer geeigneten Steuerkurve ist dadurch ein sanftes und rückfreies Beschleunigen und Bremsen (Anfahren der Endanschläge) möglich.

Alternativ oder zusätzlich kann es zweckmäßig sein (z.B. für Korrekturen), dass der Steuereinrichtung ein Messsignal entsprechend der aktuellen Stellung oder wenigstens der Endstellungen der Sperreinrichtung zur Verfügung steht.

Deswegen umfasst eine bevorzugte Weiterbildung der erfindungsgemäßen optischen Verschlussvorrichtung ferner eine Detektionseinrichtung, um wenigstens eine Stellung der Sperreinrichtung zu detektieren und ein entsprechendes Signal an die Steuereinrichtung auszugeben.

Dabei ist es nicht unbedingt erforderlich, dass jede Änderung der Drehstellung der Sperreinrichtung detektiert wird, sondern es kann unter Umständen durchaus ausreichen, wenn ein entsprechendes Signal bereitgestellt wird, wenn die Sperreinrichtung in die Nähe der wenigstens einen Durchlass- und/oder Sperrstellung kommt. Dieses Signal kann dann der Betätigungseinrichtung zum Beginnen des Abbremsens der Drehbewegung der Sperreinrichtung bereitgestellt werden.

Ein weiterer Aspekt der vorliegenden Erfindung liegt in der Bereitstellung von optischen Systemen mit integrierter erfindungsgemäßer optischer Verschlussvorrichtung. Dadurch entfallen für den Benutzer etwaige Probleme hinsichtlich des Einbaus oder der Justierung der erfindungsgemäßen optischen Verschlussvorrichtung in bestehenden optischen Systemen.

Die Erfindung betrifft ferner ein Verfahren zur Steuerung der Beleuchtungsdauer eines vorbestimmten Bereichs in einem Strahlengang einer optischen Vorrichtung, insbesondere für Strahlung im Wellenlängenbereich unter 300 nm, wobei die Beleuchtungsdauer durch wahlweise Unterbrechung des Strahlengangs gesteuert wird.

Vorzugsweise verwendet dieses Verfahren eine der in den Ansprüchen 1 bis 14 definierten optischen Verschlussvorrichtungen.

Weitere Vorteile und Aspekte der vorliegenden Erfindung werden im Folgenden anhand einer bevorzugten Ausführungsform der Erfindung unter Bezugnahme auf die beigefügten Figuren erläutert.
- Figur 1: zeigt schematisch eine Querschnittsansicht der Sperreinrichtung einer Ausführungsform der erfindungsgemäßen optischen Verschlussvorrichtung, wobei die Sperreinrichtung in Durchlassstellung ist.
- Figur 2: zeigt die der Figur 1 entsprechende Draufsicht auf die Sperreinrichtung.
- Figur 3: zeigt schematisch eine Querschnittsansicht dieser Ausführungsform der mit der Sperreinrichtung in Sperrstellung.
- Figur 4: zeigt die der Figur 3 entsprechende Draufsicht auf die Sperreinrichtung.
- Figur 5: zeigt die den Figuren 1 und 2 entsprechende perspektivische Ansicht einer bevorzugten Ausführungsform der erfindungsgemäßen optischen Verschlussvorrichtung.
- Figur 6: zeigt die den Figuren 3 und 4 entsprechende perspektivische Ansicht einer bevorzugten Ausführungsform der erfindungsgemäßen optischen Verschlussvorrichtung.

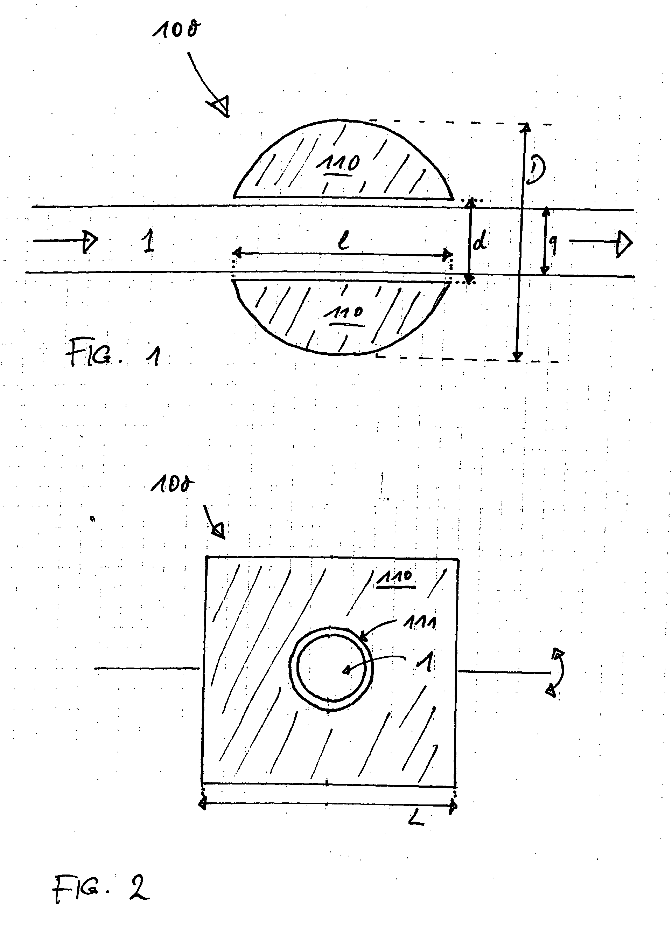

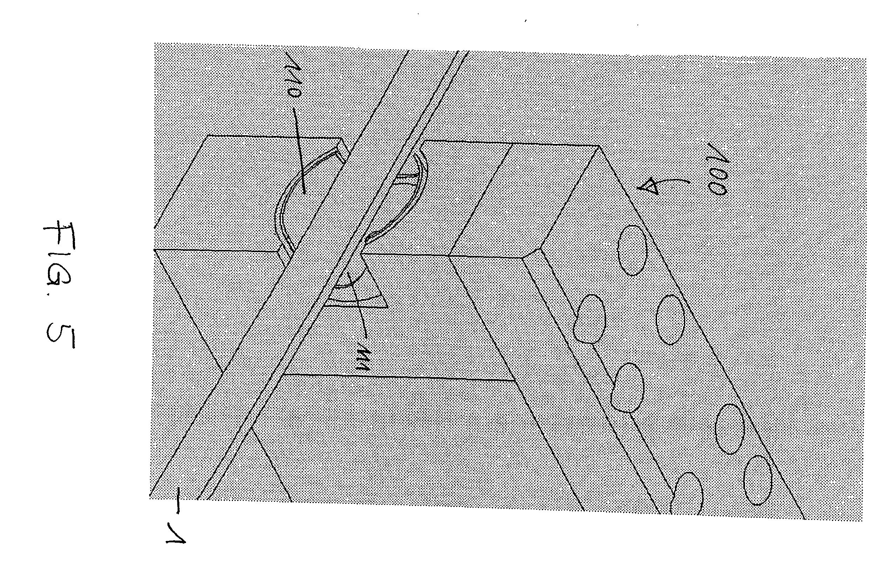

Die Figuren 1 bis 6 zeigen verschiedene schematische Ansichten einer Ausführungsform der erfindungsgemäßen optischen Verschlusseinrichtung 100.

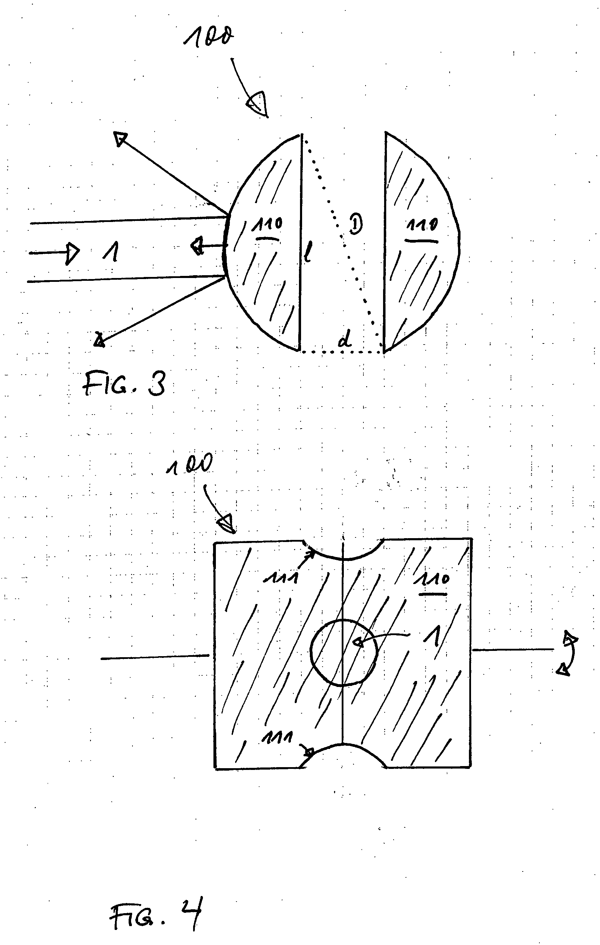

Dabei ist die Verschlusseinrichtung 100 in den Figuren 1, 2 und 5 auf Durchlass eingestellt, so dass der Lichtstrahl 1 durch die Sperreinrichtung 110 nicht beeinflusst wird, während sie in den Figuren 3, 4 und 6 den optischen Weg blockiert.

In dieser Ausführungsform wird die Sperreinrichtung 110 durch einen Zylinder gebildet, der eine Querbohrung 111 aufweist, die den Zylinder zentral durchstößt.

Es sei hier nur nebenbei angemerkt, dass Figuren 1 und 3 auch die Querschnittsansicht einer weiter nicht beschriebenen alternativen Ausführungsform repräsentieren könnten, bei der die Sperreinrichtung statt durch einen Zylinder durch eine Kugel mit Querbohrung 111 gebildet wird.

In den Figuren 1, 2 und 5 liegt eine Drehstellung der Sperreinrichtung 110 vor, bei der die Querbohrung 111 mit dem Strahlengang fluchtet.

Im Gegensatz dazu ist die Sperreinrichtung 110 in den Figuren 3, 4 und 6 um 90° (bzw. ein ungeradzahlig Vielfaches von 90°) verdreht, so dass der Lichtstrahl 1 durch den konvex gekrümmten Oberflächenbereich der Sperreinrichtung blockiert wird. Wenn dieser Oberflächenbereich reflektierende Eigenschaften hat, so bewirkt die Krümmung eine Strahlaufweitung, d.h. dass der reflektierte Lichtstrahl divergiert. Dies ist in Figur 3 angedeutet. Durch Verteilung der Strahlungsenergie in einen größeren Raumwinkel kann die Strahlungsbelastung der Umgebung verringert werden, was vor allem bei energiereicher oder aus anderen Gründen gefährlicher Strahlung wünschenswert ist.

Der Durchmesser d der Querbohrung 111 muss mindestens so groß wie der Strahlquerschnitt q sein. In der Praxis ist es zweckmäßig, den Durchmesser d der Querbohrung 111 etwas größer als den Strahlquerschnitt q zu wählen, damit Beugungseffekte vernachlässigbar bleiben und der Lichtstrahl tatsächlich unbeeinflusst durchgelassen wird.

Ebenso darf die in den Figuren 1 und 3 eingezeichnete Sekante I (die der Wandlänge der Bohrung bei dem hier der Einfachheit halber angenommenen Vollzylinder entspricht) nicht kleiner als der Strahlquerschnitt q werden, da sonst eine vollständige Abblockung des Lichtstrahls I nicht möglich ist.

Mit den Ungleichungen I>q und d>q, sowie der Beziehung I²+d² = D² folgt, dass bei optischen Systemen mit einem maximalen Strahlquerschnitt q eine optische Verschlussvorrichtung mit einer Sperreinrichtung verwendet werden sollte, deren Durchmesser D größer als 2^{1/2}q ist.

In vielen Fällen sind bei optischen Vorrichtungen enge Grenzen hinsichtlich des für weitere Komponenten zur Verfügung stehenden Platzbedarfs gesteckt. Demzufolge ist es in vielen Fällen erforderlich, eine möglichst kompakte und raumsparende Verschlussvorrichtung bereitzustellen. Bei einem gegebenen Strahlquerschnitt q sollte daher die Länge L des Zylinders der Sperreinrichtung 110 nur geringfügig größer als der Strahlquerschnitt q sein, während der Durchmesser D nur geringfügig größer als 2^{1/2}q sein sollte.

Die Sperreinrichtung 110 kann durch einen Vollzylinder mit einer durchgehenden Bohrung 111 gebildet werden.

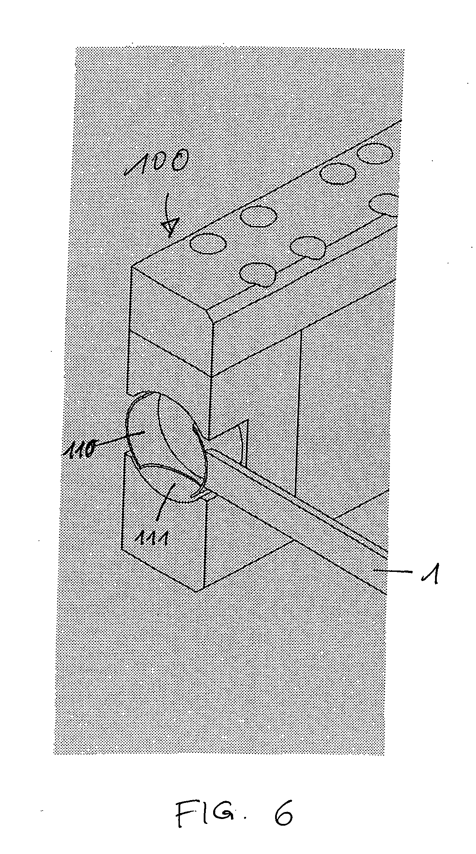

In der Praxis ist aber eine leichte Ausführung der Verschlussvorrichtung 100, und insbesondere im Hinblick auf eine möglichst leichtgängige Betätigbarkeit, eine leichte Ausführung der Sperreinrichtung 110 erwünscht, und daher verwendet die besonders bevorzugte Ausführungsform anstelle eines Vollzylinders mit Querbohrung einen entsprechenden dünnwandigen Hohlzylinder als Sperreinrichtung 110. Dies ist in den perspektivischen Absichten der Figuren 5 und 6 veranschaulicht.

Zur besseren Veranschaulichung ist die optische Verschlussvorrichtung 100 in den Figuren 5 und 6 auf Höhe der Sperreinrichtung 110 aufgeschnitten. Die in den Figuren 1 und 3 dargestellte Bohrung 111 reduziert sich hier auf zwei die Zylinderwand durchstoßende Bohrungslöcher 111.

In Figur 5 ist auch der Lichtstrahl 1 angedeutet, der sich durch die beiden die Zylinderwand durchstoßenden Bohrungslöcher 111 ungestört ausbreitet, während er in Figur 6 durch die Sperreinrichtung blockiert wird

Die Sperreinrichtung 210 kann mit einer Betätigungseinrichtung, z.B. axial mit einem Motor, verbunden sein, der die Sperreinrichtung 210 durch Rotation um 90° aus der in Figur 5 gezeigten Durchlassstellung in die Sperrstellung von Figur 6 bringt, und umgekehrt.

Als Antrieb eignen sich sowohl Gleichstrom- als auch Schrittmotoren, wobei deren Wellenlagerung gleichzeitig zur Lagerung der Sperreinrichtung verwendet wird. Der mechanische Verschleiß wird dadurch auf ein Minimum reduziert, was eine hohe Lebensdauer der Verschlussvorrichtung gewährleistet.

Um einen möglichst erschütterungsfreien Betrieb bei gleichzeitig schnellstmöglicher Verschlusszeit zu gewährleisten, ist es bei der Verwendung eines Gleichstrommotors als Betätigungseinrichtung zweckmäßig, die Drehbewegung vor dem Erreichen der Sperrstellung abzubremsen. Dasselbe gilt analog für eine möglichst kurze Öffnungszeit, wobei die Drehbewegung zuerst langsam beginnen, aber dann beschleunigt werden sollte.

Um dies zu ermöglichen, können beispielsweise an der Sperreinrichtung um 90° versetzte Fahnen vorgesehen sein, die eine Lichtschranke berührungslos betätigen, welche wiederum ein entsprechendes Positionssignal an eine Ansteuerschaltung für den Gleichstrommotor ausgibt.

Bei einem Schrittmotor ist dagegen die Anzahl der Schritte für eine 90°-Drehung durch die Spezifikationen des Motors vorgegeben, so dass die aktuelle Stellung der Sperreinrichtung durch die jeweilige Schrittnummer festgelegt wird, eine separate Positionsdetektion also nicht zwingend notwendig ist.

Sowohl wegen der geringen Empfindlichkeit gegenüber Strahlung, als auch wegen der leichten Bearbeitbarkeit wird die Sperreinrichtung bevorzugt aus einem metallischen Material hergestellt, wobei unter Berücksichtigung verschiedener Aspekte wie Gewicht, Oberflächeneigenschaften, Stabilität und Anschaffungs- bzw. Herstellungskosten zur Zeit Aluminium als Material für die Sperreinrichtung bevorzugt wird.

Es sei betont, dass - abweichend von den gezeigten Ausführungsformen - die Orientierung und Krümmung des in Sperrstellung beleuchteten Oberflächenbereichs je nach Bedarf gewählt werden können. Als exemplarische Beispiele seien hier nur genannt:
a) es kann zweckmäßig sein, den unterbrochenen Lichtstrahl zur Verwendung für eine weitere Messvorrichtung lediglich umzulenken; in diesem Fall wäre eine ebene, schräggestellte reflektierende Sperreinrichtung zu verwenden.
b) unter Umständen kann es erwünscht sein, den zurückreflektierten Strahl zu fokussieren statt aufzuweiten; diese könnte z.B. durch eine konkave Krümmung des beleuchteten Oberflächenbereichs bewirkt werden.

Die erfindungsgemäße Verschlussvorrichtung ist ferner vorzugsweise so eingerichtet, dass die Grundstellung der Sperreinrichtung die Sperrstellung ist. Hierzu kann eine (z.B. rein mechanische) Rückholeinrichtung vorgesehen sein (z.B. eine vorgespannte Feder), die die Sperreinrichtung automatisch in die Sperrstellung bringt, solange keine entgegenwirkende Kraft wirkt. Dadurch können Schäden der optischen Vorrichtung vermieden werden, die bei einem Versagen des Steuermotors (z.B. als Folge eines Stromausfalls) auftreten könnten.

Da bei einer eingebauten Verschlussvorrichtung von außen im Allgemeinen nicht erkennbar ist, ob sie im sperrenden Zustand oder in Durchlassstellung ist, ist vorzugsweise eine Anzeigeeinrichtung vorgesehen, die die jeweils aktuell vorliegende Stellung zur Anzeige bringt.

## Patentansprüche

1. Optische Verschlussvorrichtung (100, 200) für eine wahlweise Unterbrechung eines Strahlengangs, insbesondere für Licht in einem Wellenlängenbereich unter 300 nm, umfassend:
eine Sperreinrichtung (110, 210), die in wenigstens eine Stellung zur Unterbrechung des Strahlengangs und in wenigstens eine Stellung zur Öffnung des Strahlengangs bringbar ist.

2. Optische Verschlussvorrichtung (100, 200) nach Anspruch 1, in welcher die Sperreinrichtung (110, 210) in die wenigstens eine Stellung zur Unterbrechung des Strahlengangs und in die wenigstens eine Stellung zur Öffnung des Strahlengangs drehbar ist.

3. Optische Verschlussvorrichtung (100, 200) gemäß einem der vorangegangenen Ansprüche, in welcher die Sperreinrichtung (110, 210) einen gekrümmten lichtundurchlässigen Oberflächenbereich umfasst.

4. Optische Verschlussvorrichtung (100, 200) gemäß einem der vorangegangenen Ansprüche, in welcher die Sperreinrichtung (110, 210) einen zylindrischen oder sphärischen Oberflächenbereich umfasst.

5. Optische Verschlussvorrichtung (100, 200) gemäß einem der vorangegangenen Ansprüche, in welcher die Sperreinrichtung (110, 210) wenigstens eine durchgehende Bohrung (111, 211) aufweist, die mit dem Strahlengang ausrichtbar ist, um den Durchgang eines Lichtstrahls (1) zu ermöglichen.

6. Optische Verschlussvorrichtung (100, 200) gemäß Anspruch 5, in welcher die Sperreinrichtung (110, 210) genau eine durchgehende Bohrung (111, 211) aufweist.

7. Optische Verschlussvorrichtung (100, 200) gemäß einem der vorangegangenen Ansprüche, ferner umfassend:
eine Halterungseinrichtung, in der die Sperreinrichtung (110, 210) bewegbar gelagert ist.

8. Optische Verschlussvorrichtung (100, 200) gemäß einem der vorangegangenen Ansprüche, ferner umfassend:
Einrichtungen, um den Durchgang von Streulicht durch die optische Verschlussvorrichtung (100, 200) zu verhindern.

9. Optische Verschlussvorrichtung (100, 200) gemäß einem der vorangegangenen Ansprüche, ferner umfassend:
eine Betätigungseinrichtung, um die Sperreinrichtung (110, 210) in die wenigstens eine Stellung zur Unterbrechung des Strahlengangs und in die wenigstens eine Stellung zur Öffnung des Strahlengangs zu bringen.

10. Optische Verschlussvorrichtung (100, 200) gemäß Anspruch 9, ferner umfassend:
eine Steuereinrichtung zur Steuerung der Betätigungseinrichtung.

11. Optische Verschlussvorrichtung (100, 200) gemäß Anspruch 10, ferner umfassend:
eine Detektionseinrichtung, um eine Stellung der Sperreinrichtung zu detektieren und ein entsprechendes Signal an die Steuereinrichtung auszugeben.

12. Eine optische Vorrichtung, insbesondere eine optische Messvorrichtung, mit einer optischen Verschlussvorrichtung (100, 200) gemäß einem der vorangegangenen Ansprüche.

13. Ein Verfahren zur Steuerung der Beleuchtungsdauer eines vorbestimmten Bereichs in einem Strahlengang einer optischen Vorrichtung, insbesondere für Strahlung im Wellenlängenbereich unter 300 nm, wobei die Beleuchtungsdauer durch wahlweise Unterbrechung des Strahlengangs gesteuert wird.

14. Ein Verfahren nach Anspruch 13, wobei eine optische Verschlussvorrichtung (100, 200) gemäß einem der Ansprüche 1 bis 11 verwendet wird.
